Europäisches Patentamt

(19) European Patent Office

Office européen des brevets

(11) **EP 0 875 951 A1**

(12) **EUROPEAN PATENT APPLICATION**

(43) Date of publication:
04.11.1998 Bulletin 1998/45

(51) Int. Cl.[6]: **H01M 4/02**, H01M 10/40,
H01M 4/48, H01M 4/58

(21) Application number: 98105635.1

(22) Date of filing: 27.03.1998

(84) Designated Contracting States:
AT BE CH DE DK ES FI FR GB GR IE IT LI LU MC
NL PT SE
Designated Extension States:
AL LT LV MK RO SI

(30) Priority: 30.04.1997 JP 112995/97

(71) Applicant:
MATSUSHITA ELECTRIC INDUSTRIAL CO., LTD.
Kadoma-shi, Osaka-fu, 571 (JP)

(72) Inventors:
• Takada, Kazunori
Hirano-ku, Osaka City, 547-0044 (JP)

• Fujino, Makoto
Moriguchi City, 570-0046 (JP)
• Iwamoto, Kazuya
Sakai City, 593-8304 (JP)
• Kondo, Shigeo
Hirakata-City 573-1111 (JP)

(74) Representative:
Dr. Elisabeth Jung
Dr. Jürgen Schirdewahn
Dipl.-Ing. Claus Gernhardt
Postfach 40 14 68
80714 München (DE)

(54) **Composite anode for secondary lithium battery**

(57) The invention provides a secondary lithium bat-
tery of which the electrode reaction at the negative electrode is a dissolution-deposition reaction of metallic
lithium. The battery comprises a negative electrode
which has a first electrode component where a deposition-dissolution reaction of metallic lithium will take
place in charging and discharging and a second electrode component to prevent metallic lithium from being
deposited in the form of dendrite.

The second electrode component shows elec-
tronic-ionic mixed conduction and is preferably semi-
conductive; examples are Li-intercalating transition
metal oxides and sulfides, and Li-ion conductive electro-
lytes.

FIG. 3

(a) First electrode component / Deposited Li / Second electrode component

(b) First electrode component / Deposited Li / Second electrode component

(c) First electrode component / Deposited Li / Second electrode component

**Description**

BACKGROUND OF THE INVENTION

The present invention relates to a secondary lithium battery. More specifically, this invention relates to a secondary lithium battery in which metallic lithium deposits and dissolves at its negative electrode in charging and discharging.

With development of such portable appliances as personal computer and cellular phone, the demand for batteries as their power source has risen very greatly in recent years. A high degree of energy density can be expected from the lithium battery because lithium is an element with a small atomic weight and a high ionization energy. For this reason, there is a mounting call for lithium batteries as power source for portable appliances, especially a rechargeable secondary lithium battery, and researches have been conducted actively in many quarters.

In such lithium batteries, metallic lithium, lithium alloys and lithium intercalation materials are used as negative electrode active materials. Some small-sized secondary lithium batteries called the coin type or button type are marketed which use metallic lithium or lithium alloy as a negative electrode active material. In the secondary lithium batteries of the cylindrical and other types used as main power sources for portable appliances, on the other hand, carbon materials, mainly lithium intercalation materials, are used as negative electrode active materials.

Of the above-mentioned three negative electrode active materials used in the lithium battery, metallic lithium is the highest in theoretical capacity density at 3,862 mAh/g. It is possible, therefore, to make up a secondary lithium battery with a high energy density by turning the dissolution-deposition reaction of metallic lithium into an electrochemical reaction at the negative electrode.

The problem with the lithium battery with metallic lithium as a negative electrode active material is, however, that metallic lithium tends to grow in the form of dendrite, and a lithium alloy or lithium intercalation material has to be used depending on the form and use of lithium battery.

Dendrite grows when electric current concentrates on metallic lithium where lithium tends to deposit in charging with a large current flow. Where current concentrates, lithium deposits and grows in the form of dendrite. The growing dendrite then penetrates the separator layer in time and comes in contact with the positive electrode, causing an internal short-circuit.

BRIEF SUMMARY OF THE INVENTION

It is an object of the present invention to provide a secondary lithium battery that can achieve a high energy density by solving the above-mentioned problem of dendrite formation and employing the dissolution-deposition reaction of lithium metal as electrochemical reaction at the negative electrode.

The present invention provides a secondary lithium battery comprising a lithium ion conductive electrolyte and positive and negative electrodes in contact therewith, wherein the negative electrode comprises a first electrode component where the deposition-dissolution reaction of lithium metal takes place during charge-discharge at the negative electrode and a second electrode component to prevent lithium metal from dendritic formation.

In a preferred mode of the present invention, the first electrode component is comprised of an electronic conductive material and the second electrode component is comprised of a material having electronic-ionic mixed conduction or semiconduction for electron.

In another preferred mode of the present invention, the second electrode component is formed on the first electrode component.

In still another preferred mode of the present invention, the second electrode component is comprised of a material having electronic-ionic mixed conduction and the electronic conductivity thereof is lower than the ionic conductivity of the lithium ion conductive electrolyte, preferably lower than or equal to $5 \times 10^{-2}$S/cm.

In another preferred mode of the present invention, the second electrode component is comprised of a material having electronic-ionic mixed conduction and the transport number of electron in the second electrode component is smaller than that of lithium ion.

Also, used in the second electrode component are materials which show an oxidising reaction on lithium metal. Still another suitable material as the second electrode component is the kind of material of which the equilibrium potential with no lithium metal present at the negative electrode is more positive than 50 mV vs. Li/Li$^+$.

While the novel features of the invention are set forth particularly in the appended claims, the invention, both as to organization and content, will be better understood and appreciated, along with other objects and features thereof, from the following detailed description taken in conjunction with the drawings.

BRIEF DESCRIPTION OF THE SEVERAL VIEWS OF THE DRAWING

Fig. 1 are diagrams schematically showing the potential in charging at the negative electrode of secondary lithium batteries according to the present invention.

Fig. 2 are diagrams schematically showing the process of metallic lithium being deposited on a metal electrode and a semiconductor electrode.

Fig. 3 is a schematic drawing showing the mechanism of lithium being kept from growing into dendrite according to the present invention.

Fig. 4 is potential diagrams schematically showing the mechanism of lithium being kept from growing into dendrite according to the present invention.

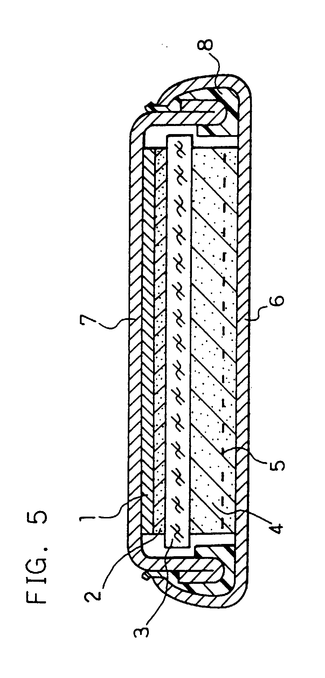

Fig. 5 is a vertical cross sectional view of a secondary lithium battery in an embodiment of the present invention.

Fig. 6 is the charge-discharge curves of a secondary lithium battery in an embodiment of the present invention.

Fig. 7 shows charge-discharge cycle characteristics of a secondary lithium battery in an embodiment of the present invention.

Fig. 8 is the charge-discharge curves of the secondary lithium battery of the comparative example.

Fig. 9 shows charge-discharge cycle characteristics of the secondary lithium battery of the comparative example.

Fig. 10 is a vertical cross sectional view of a secondary lithium battery in another embodiment of the present invention.

DETAILED DESCRIPTION OF THE INVENTION

The present invention is based on a discovery that materials such as $Li_xTiO_2$ and $Li_xWO_3$ in the negative electrode prevent deposition of lithium from dendritic growth. According to this effect, employing of the dissolution-deposition reaction of lithium metal as electrode reaction at the negative electrode makes it possible to construct a secondary lithium battery with a high energy density.

The inventors surmise that the reason why the use of such materials as $Li_xTiO_2$ and $Li_xWO_3$ in the negative electrode prevent dendritic formation is one of the following three effects of those materials or their synergistic effect. By the three actions, it is understood that such materials as $Li_xTiO_2$ and $Li_xWO_3$ have:

(1) Electronic-ionic mixed conduction,
(2) Semiconductor-like property and
(3) Local oxidation of lithium metal.

The mechanism of keeping down the growth of dendrite by those actions are hereinafter described.

As described later in the embodiments and elsewhere, the negative electrode of the secondary battery according to the present invention is composed of a first electrode component for metallic lithium to dissolve and deposit, namely a negative electrode current collector or an electrode separately provided on the negative electrode current collector and such materials as $Li_xTiO_2$ and $Li_xWO_3$ to keep down the growth of dendrite. Hereinafter, such materials as $Li_xTiO_2$ and $Li_xWO_3$ to keep down the growth of dendrite shall be called second electrode component.

It should be noted that the first and the second electrode components can be made up into a mixed form, but for simplicity's sake, an arrangement with the second electrode component placed on the first electrode component is described hereinafter.

(1) Electronic-ionic mixed conduction

Lithium ions in the electrolyte are rendered in a solvated state by the organic solvent used in the electrolyte. Even if such lithium ions are reduced and deposited as metallic lithium, the organic solvent molecules are firmly adsorbed on the surface of the lithium metal. Therefore, when metallic lithium deposits continuously on the electrode, the deposition concentrates at an active site on the electrode where the organic solvent is less adsorbed, resulting in a dendrite growing.

On the other hand, such materials as $Li_xTiO_2$ and $Li_xWO_3$ show electron-lithium ion mixed conduction. If those materials as second electrode components are provided on the first electrode component where metallic lithium deposition takes place, the lithium ions migrating in such solids as $Li_xTiO_2$ and $Li_xWO_3$ are reduced on the first electrode component, depositing metallic lithium. The lithium ions that migrate in the solid like that are not solvated with the organic solvent, and as a result the molecules of the organic solvent are hardly adsorbed on the interface between the first and the second electrode components. By providing an electronic-ionic mixed conductive second electrode component, it is possible to make up a secondary lithium battery with the growth of a metallic lithium dendrite kept down.

Such a phenomenon of concentrated deposition of metallic lithium as mentioned above are also liable to be caused by an uneven electric double layer.

In charging the secondary lithium battery, the lithium ions in the Helmholtz layer on the electrode surface are reduced and deposited as metallic lithium. To deposit metallic lithium not in the form of dendrite but evenly, therefore, it is necessary to keep the Helmholtz layer uniform during charging the battery. As metallic lithium is deposited, the lithium ion concentration in the Helmholtz layer falls, with lithium ions diffusing into it from the offing in the electrolyte. The result is that there arises a concentration gradient of lithium ion inside the electrolyte. Since, however, the lithium ion concentration is relatively low in the electrolyte generally used in the secondary lithium battery, the double layer where there arises that lithium ion concentration gradient will spread widely from the electrode surface toward the offing.

As a result, the diffusing double layer structure is subject to be effected by the form of the negative electrode or the separator and the positive electrode present inside the battery, and in case a distribution in the density of electric current flowing in the electrolyte becomes nonhomogeneous, metallic lithium will be deposited in the form of dendrite in the area where electric current concentrates.

In the electronic-ionic mixed conductor, on the other hand, lithium ions are present in a high concentration and this diffusing double layer gets thin, which will keep down such a concentration of electric current and a deposition of metallic lithium in the form of dendrite as in the above-mentioned case.

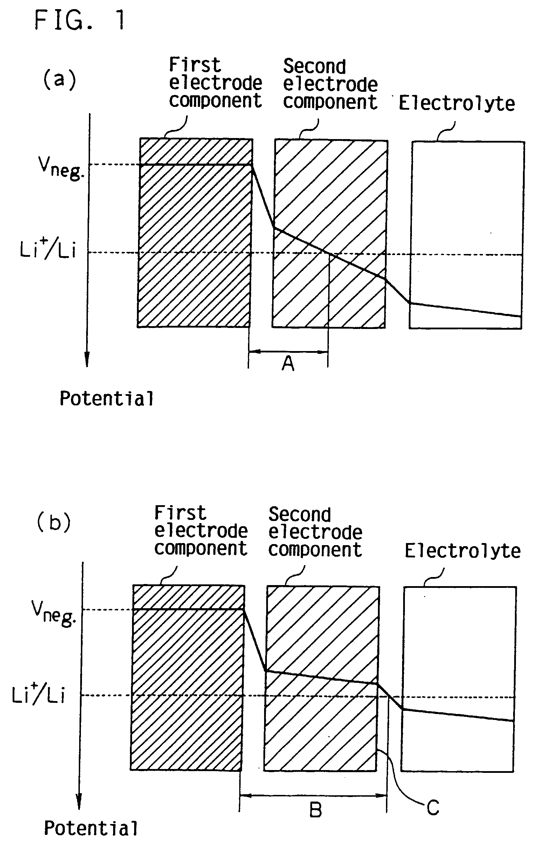

It is desired that the electronic conductivity of the second electrode component is lower than the ionic conductivity of the lithium ion conductive electrolyte used in the battery. The potential diagram in the first and the second electrode components in such a case is shown schematically in Fig. 1 (a). If the electronic conductivity of the second electrode component is lower than the ionic conductivity of the lithium ion conductive electrolyte, the potential gradient in the second electrode will be higher than that in the electrolyte. As a result, even when the negative electrode shows a potential $V_{neg.}$, therefore, the scope of lithium ion reduction is limited to the area A as indicated in Fig. 1 (a), with the deposition of metallic lithium confined to this area. In case the electronic conductivity of the second electrode component is very high, on the other hand, metallic lithium can deposit in the area B indicated in Fig. 1 (b) or the interface between the second electrode and the electrolyte, and the metallic lithium deposited on the surface C of the second electrode component takes the form of dendrite.

For this reason, it is preferable that the electronic conductivity of the second electrode component should be lower than the ionic conductivity of the lithium ion conductive electrolyte used in the battery, more specifically not higher than $5 \times 10^{-2}$ S/cm.

In case, in the second electrode component, the ionic conductivity is inferior to the electronic conductivity, electrons pass through the second electrode component before the lithium ions pass through the second electrode component and are reduced on the first electrode component, thus creating a process in which the lithium ions are reduced on the surface C of the second electrode component. It is preferable, therefore, that the transport number of lithium ion at the second electrode component is higher than the transport number of electron, more preferably not lower than 5 times as high as the transport number of electron.

(2) Semiconductor-like property

If the metal electrode is polarized to a more negative potential than the metallic lithium potential in the lithium ion conductive electrolyte, then there will take place an electron transfer from the metal electrode to the electrolyte, with the metallic lithium deposited on the electrode.

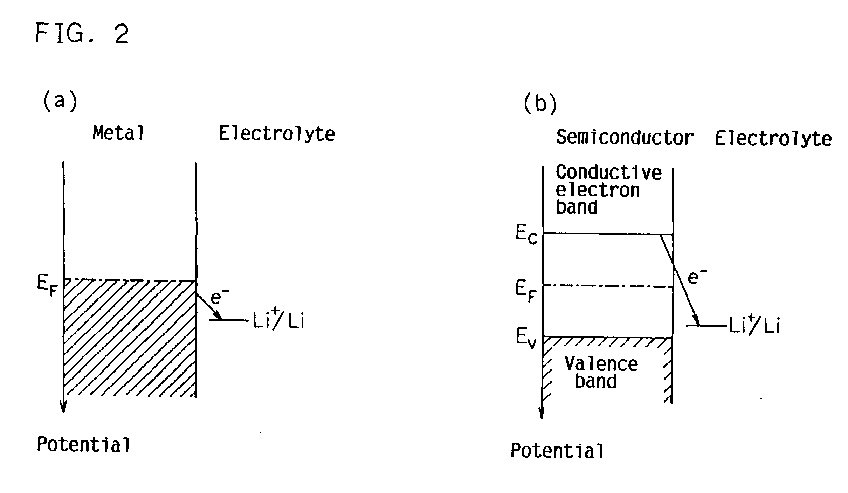

On the semiconductor electrode, on the other hand, even if the electrode is polarized to a more negative potential than the metallic lithium potential, the electron transfer is limited to from the conduction band to the electrolyte as shown in Fig. 2 (b) when the difference between the polarized potential and the metallic lithium potential is smaller than the difference between the potential at the top of the valence band ($E_v$) and the Fermi energy ($E_F$).

Only thermal-excited electrons are in the conduction band, and the density of electrons with energy high enough to reduce lithium ions is low, therefore an electron transfer as shown in Fig. 2 (b) will hardly ever take place. That is, lithium is hardly deposited on such a semiconductor electrode and, therefore, metallic lithium is deposited selectively on the first electrode component shown in Fig. 1, thereby the growth of dendrite can be kept down.

To produce such an effect, it is desirable that the band gap size ($E_c$ - $E_v$) of the semiconductor-like electronic conductive material used in the second electrode is not lower than 0.3 eV, more preferably not lower than 1 eV.

In case the band gap is too large, on the other hand, the electric conductivity of the second electrode component will be low, and the internal resistance of the secondary lithium battery will be high. For this reason, it is preferable that the band gap of the material used in the second electrode component should be not higher than 5 eV, more preferably not higher than 3 eV.

(3) Local oxidation of metallic lithium

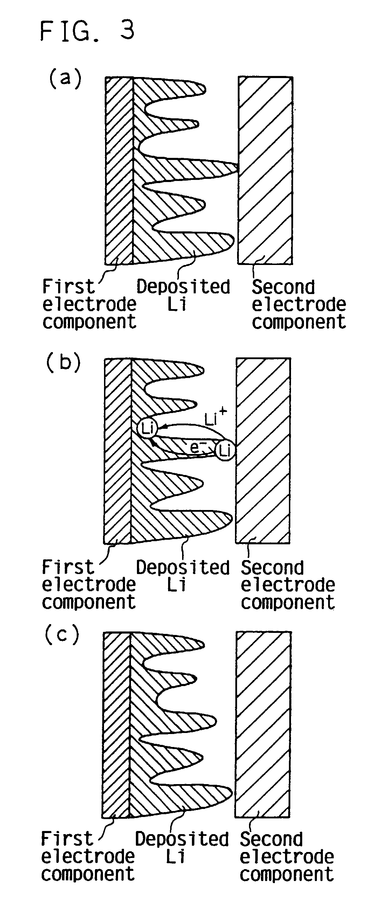

If the second electrode component is a porous material, for example, the electrolyte will be found on the surface of the first electrode component, too. If the battery is charged in such a condition, it will result in the electron transfer from the first electrode component to the electrolyte, thus causing metallic lithium to deposit between the first and second electrode components concurrently. Since the metallic lithium thus deposited is due to the reduction of lithium ions in the electrolyte, it is liable to take the form of dendrite. A dendrite growth of metallic lithium on the first electrode component is shown schematically in Fig. 3 (a).

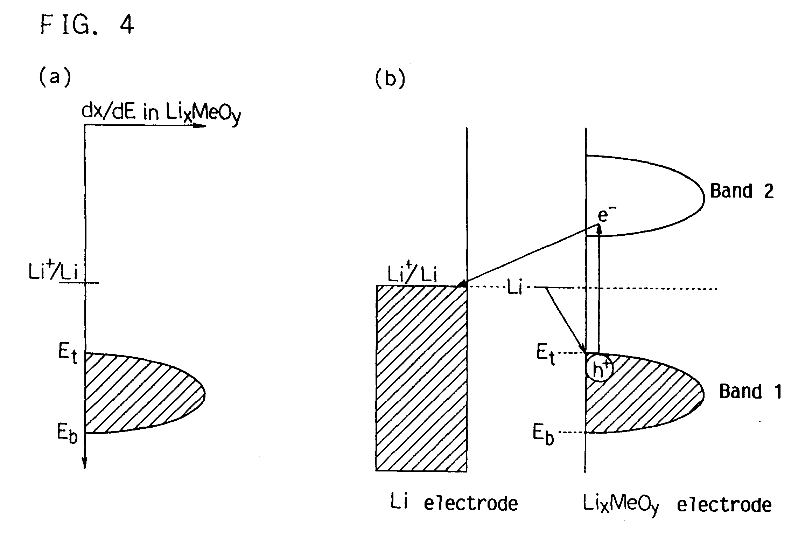

The relation of the density of intercalation state of lithium ions into such materials as $Li_xTiO_2$ and $Li_xWO_3$ to the altered potential is generally represented in Fig. 4 (a) where those materials are represented by $Li_xMeO_y$. Also, the electronic structure of such materials is shown on the right side in Fig. 4(b). As the dendrite of metallic lithium grows large and comes in contact with the second electrode component as illustrated in Fig. 3 (a), electrons will transfer from the metallic lithium in the area in contact with the second electrode component into the holes created by thermal excitation of electron from Band 1 to Band 2 (oxidizing process of metallic lithium). Along therewith, the electrons thermal-excited into Band 2 will migrate into the metallic lithium electrode.

In this process, the part of metallic lithium that comes in contact with the second electrode component as shown in Fig.3(b) is oxidized and dissolved, then redeposited on the other part of the deposited metallic lithium. As a result, the form of the deposited metallic lithium improves in flatness as illustrated in Fig. 3 (c).

As this process is repeated, the metallic lithium deposited between the first and the second electrode components increases in flatness and compactness, not growing into a dendrite.

As described, there take place two reactions simultaneously in the negative electrode according to the present invention: a reaction to oxidize and dissolve metallic lithium and the other to reduce and deposit lithium ions. In describing the series of mechanisms above, the term "oxidizing reaction" is used to define the oxidising and dissolving process of the part of metallic lithium in contact with the second electrode, and does not mean that the second electrode component actually oxidizes metallic lithium. That is to say, the reaction mentioned here means that the equilibrium reaction rate between these oxidizing and dissolving reaction and reducing and depositing reaction can be raised by providing a second electrode component in the negative electrode and that deposited metallic lithium can be made flat in the form more effectively.

To keep down the deposition of metallic lithium in the form of dendrite by such mechanism, it is preferable that $E_t$ or the equilibrium potential with the second electrode layer showing the most negative potential as far as no metallic lithium present in the negative electrode is positive as compared with the lithium electrode potential, more preferably more positive than 50 mV vs. Li/Li$^+$.

If a secondary lithium battery is to be made up which is free from growing a dendrite while the dissolution-deposition reaction of metallic lithium is employed as electrochemical reaction at the negative electrode, it is required that the second electrode component shows at least one of the aforementioned three actions.

More preferably, the second electrode component used in the negative electrode shows more than one of those actions, so that the synergistic effect can effectively keep down the deposition of lithium in the form of dendrite.

Those three actions have to be shown only when the second electrode component is polarized in the neighborhood of the lithium electrode potential; those actions are not required over a wide potential range.

Among the preferred materials to make up a second electrode component showing those actions are such transition metal oxides as titanium oxide, tungsten oxide, vanadium oxide, niobium oxide, molyodenum oxide and the like. Those transition metal oxides become lithium-transition metal complex oxides to act as electron-lithium ion mixed conductor as lithium ions are doped in a charging reaction of the battery. Also, the materials doped with lithium ions prior to forming a battery can be used in the same way; the same effects can also be obtained with those materials doped with sodium ions, potassium ions or the like instead of lithium ions.

Also, among the materials that show the same actions, transition metal-contained nitrides can be used.

Similar results can also be obtained with such transition metal sulfides as molybdenum disulfide, titanium disulfide and a variety of Chevrel phase compounds instead of transition metal-contained oxides. Those transition metal sulfides show metallic conduction as compared with transition metal oxides; and therefore, more preferable are transition metal oxides.

For similar reasons, transition metal-contained oxides are more preferably used than carbon materials such as graphite.

Li$_{1+x}$M$_x$Ti$_{2-x}$(PO$_4$)$_3$(M=Al, Sc, Y, La etc.), Li$_{0.5-3x}$RE$_{0.5+x}$TiO$_3$ (RE = rare earth elements such as La, Pr, Nd and Sm) and the like are generally called lithium ion conductive solid electrolyte. However, if batteries with solid electrolytes containing those transition metals as a second electrode component are charged, a reduction reaction

$$Ti^{4+} \rightarrow Ti^{3+}$$

will occur, showing an electron-lithium ion mixed conduction, and those compounds, therefore, can be used as material for second electrode component as well.

A number of lithium batteries with the dissolving and deposition reaction of metallic lithium as electrode reaction at the negative electrode have been previously disclosed in which some techniques of providing a second electrode component are proposed to improve the cycle characteristics; for example, provision of a lithium tonic and electronic conductive coating layer on metallic lithium (Japanese Laid-Open Patent Publication Hei 4-248276), provision of lithium-diffused porous carbon sheet on an aluminum-lithium alloy layer (Japanese Laid-Open Patent Publication Hei 4-162372) and provision of a protective layer comprised mainly of carbon material over a metallic lithium sheet or a lithium alloy sheet (Japanese Laid-Open Patent Publication Hei 4-229562).

In the secondary lithium battery according to the present invention, any of those materials including metallic lithium and lithium alloy and other electronic conductive materials can be used as material to make up a first electrode component of the negative electrode where the deposition and dissolving reaction of metallic lithium takes place.

The problem is, however, that the first electrode component is one on the surface of which metallic lithium deposits and dissolves, and if metallic lithium is used as first electrode component, the first electrode component itself undergoes a deposition-dissolution reaction during charge-discharge of the battery, resulting a change in the surface configuration etc.; thus it is difficult to obtain stable operating characteristics.

With a material liable to have an irreversible reaction with metallic lithium, too, the initial charge-discharge efficiency will fall. In case a metal liable to form an alloy with lithium is used as material to make a first electrode component, therefore, it is necessary to use one with a high reversibility of electrochemical alloy-forming reaction with lithium. Among the materials meeting this requirement are metallic indium and metallic aluminum. First electrode components in which those metals are used to form an alloy with lithium in the battery, but ones alloyed in advance can also be used.

To solve those problems, furthermore, it is preferable to use a first electrode component which is made of a material less likely to cause a deposition-dissolution reaction by itself while the battery is in operation. To be specific, preferable is that the material should be insoluble in the electrolyte within the potential range at which the negative electrode is placed with the battery in operation or the potential range more negative than 1 V vs. $Li/Li^+$ at least.

Among the especially preferred such materials the constituents of which are not prone to a dissolution-deposition reaction and, furthermore, an irreversible reaction with metallic lithium are metallic copper, nickel, tungsten, iron and ion-based alloys including stainless steel.

The carbon material is also preferably used, because its reaction is high in reversibility and also because carbon is hard to dissolve and deposit, though it forms an interlayer compound with lithium.

To keep down the above-mentioned deposition of metallic lithium in the form of dendrite, it is preferable that a second electrode component is formed on a first electrode component.

However, it is possible to make up a negative electrode with the first and second electrode component materials mixed together. It is still preferable that a second electrode component is formed on the layer of the mixture of the first and second electrode component materials. That increases the first electrode area where metallic lithium is deposited and can effectively keep down the deposition of metallic lithium in the form of dendrite, because the first electrode component is not exposed in the electrolyte.

It is also preferable that the materials used as second electrode component are in the form of powder with a surface area of not smaller than 50 $m^2$/g. Such a high surface area can shorten the diffusing length of lithium ions in the second electrode component material, raising the operating current of the battery.

Now, the present invention will be further described in detail with embodiments.

Embodiment 1

In this embodiment, a secondary lithium battery was made up using a lithium-doped titanium oxide ($Li_xTiO_2$) as an electronic-ionic mixed conductor. The details are hereinafter described.

First, a negative electrode was prepared in the following manner.

A titanium oxide of the anatase type was used. This titanium oxide and a binder polyvinylidene fluoride (hereinafter referred to as PVDF) were blended in a mixing ratio of 95:5 by weight in N-methyl-2-pyrolizidone (hereinafter referred to as NMP). More NMP was then added to adjust the viscosity to prepare a slurry containing titanium oxide and PVDF.

A copper foil was used as a first electrode component (current collector). Over this copper foil was coated the aforementioned slurry by doctor blade technique, which was then dried in hot air at 80°C and then rolled. Thus, a second electrode component comprised mainly of the electronic-ionic mixed conductor titanium oxide was formed on the first electrode component. A disk 16.5 mm in diameter punched out from the electrode was used as a negative electrode for the secondary lithium battery.

In the present embodiment, it is noted, a thickness of the second electrode composed of titanium oxide was approximately 100 $\mu$m.

Titanium oxide is a semiconductor with a wide band gap, but in the secondary lithium battery of the present embodiment, titanium oxide shows electronic conduction through a reaction for lithium ions to be doped in titanium oxide and acts as electronic-ionic mixed conductor, the reaction represented by formula (1).

$$TiO_2 + xLi^+ + xe^- \rightarrow Li_xTiO_2 \qquad (1)$$

As an active material for the positive electrode, $LiCoO_2$ was used which had been obtained in the following way.

The starting materials used were $Li_2CO_3$ and $Co_3O_4$. These $Li_2CO_3$ and $Co_3O_4$ were mixed in a mole ratio of 3 : 2; this mixture was then placed in an alumina crucible and heated for 24 hours at 750°C to produce $LiCoO_2$.

The synthesized $LiCoO_2$ was blended with 5 percent, by weight, of polytetrafluoroethylene (PTFE) as a binder and 5 percent, by weight, of "Ketchen Black" as a conductive material. Then, 40 mg of this mixture was filled into a current collector made of a stainless steel mesh punched into a disk 16 mm in diameter to form a positive electrode.

The lithium ion conductive electrolyte was prepared by dissolving, to a concentration of 1.O M, lithium phosphorous hexafluoride ($LiPF_6$) in a mixed solvent prepared by mixing propylene carbonate (PC) and dimethoxyethane in a volume ratio of 1 : 1.

A secondary lithium battery was fabricated using these positive electrode, negative electrode and electrolyte and a polypropylene porous film with a thickness of 50 $\mu$m as a separator.

The negative electrode was made of a copper foil 1 as a first electrode component and a second electrode layer 2 comprised mainly of titanium oxide. This negative electrode, separator 3, positive electrode 4 with a stainless mesh to serve as a current collector and to hold the positive electrode, and the electrolyte were sealed in a stainless steel battery case 6 with a stainless steel sealing plate 7 provided with a gasket 8 on the periphery.

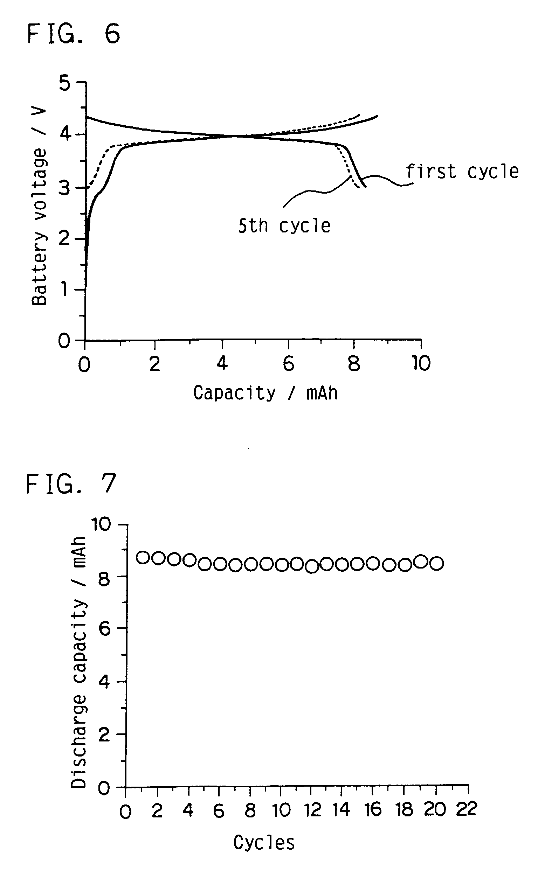

The lithium battery thus obtained was subjected to a charge-discharge cycle test at a constant current of 5 mA within a voltage range between 3.0 V and 4.2 V. Fig. 6 shows the charge-discharge curve of this lithium battery. Fig. 7 shows the change with cycles in the discharge capacity.

These results showed that the battery according to the present invention shows good cycling performance with little degradation observed in discharge capacity with charge-discharge cycles. The operating voltage of this battery is approximately 4 V, and the potential at the negative electrode of this battery seems about the same as the lithium electrode potential, which indicates that the reaction at the negative electrode of the battery during charging and discharging is a deposition-dissolution reaction of metallic lithium.

In Fig. 6, however, the charge curves were found not to be flat at the beginning of the charging. In that segment, it is considered that there took place a reaction for lithium ions to be doped in titanium oxide, the reaction represented by formula (1). There was also observed a segment not flat in voltage, the explanation for which it is thought is that a reaction just opposite to the above-mentioned took place.

After charging, the above-mentioned battery was disassembled, and the cross section of the negative electrode was examined under the scanning electron microscope. The results showed that metallic lithium had deposited only between the second and first electrode components of the negative electrode and that the deposition was not in the form of dendrite but high in compactness and flatness.

As has been observed, it was found that a secondary lithium battery can be obtained according to the present invention which does not cause metallic lithium to grow in the form of dendrite though the electrode reaction at the negative electrode is deposition-dissolution reaction of lithium metal.

Comparative Example 1

In this comparative example, a secondary lithium battery was made up without using the electrode comprised mainly of lithium-doped titanium oxide which had been used as the electronic-ionic mixed conductor in Embodiment 1. The details are described hereinafter.

The same copper foil as in Embodiment 1 was used in the first electrode component of the negative electrode. But the negative electrode was made up without forming a second electrode component comprised mainly of titanium oxide thereon.

Except that this negative electrode was used, a secondary lithium battery was fabricated in the same manner as in Embodiment 1 and the charge-discharge behavior was examined.

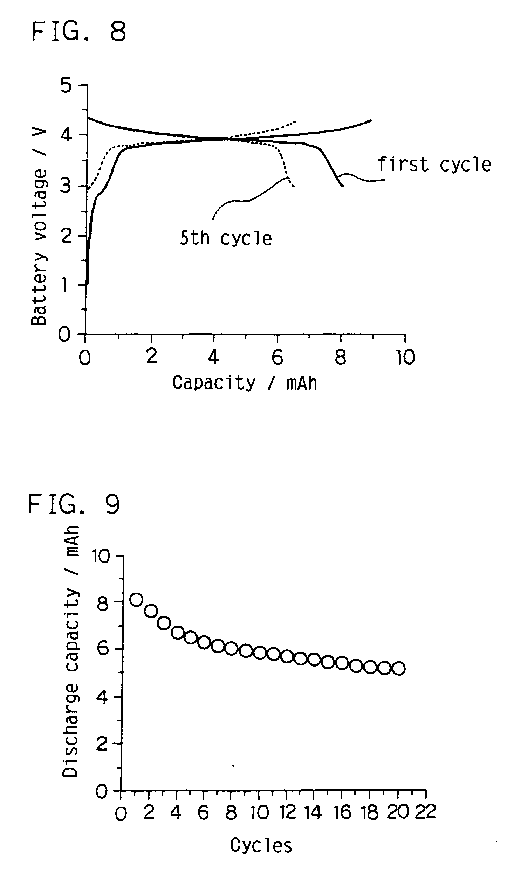

The charge-discharge curves obtained are shown in Fig. 8, and the change with charge-discharge cycles in the discharge capacity is shown in Fig. 9.

The results showed that this battery was not higher than 90 percent in the charge-discharge efficiency (ratio of the quantity of electricity discharged to the quantity of electricity charged) in charge-discharge cycles and that a significant drop was observed with charge-discharge cycles in the quantity of electricity discharged.

After charging, the above-mentioned battery was disassembled, and when the cross section of the negative electrode was examined under SEM, a deposition of metallic lithium in the form of dendrite was found on the copper foil.

It is considered from those results that in the secondary lithium battery of the present comparative example, lithium is deposited in the form of dendrite in charging and this lithium in the form of dendrite can not discharge completely, which is the cause for the drop in the characteristics of the battery with charge-discharge cycles.

Embodiment 2

Except that lithium-doped tungsten oxide ($Li_xWO_3$) was used as an electronic-ionic mixed conductor, a secondary lithium battery was made up in the same manner as in Embodiment 1 and its characteristics were examined. The details are described hereinafter.

The negative electrode for the secondary lithium battery in the present embodiment was made in the same manner as in Embodiment 1 except that tungsten oxide was used instead of titanium oxide used in Embodiment 1.

Except that this negative electrode was used, a secondary lithium battery was made up in the same manner as in Embodiment 1 and its charge-discharge behavior was examined.

These results showed that the battery according to the present invention is high in charge-discharge cycle characteristics with little changes observed in discharge capacity with charge-discharge cycles. The operating voltage of this battery is approximately 4 V, and the potential at the negative electrode of this battery is about the same as the lithium electrode potential, which indicates that the reaction at the negative electrode of the battery during charging and discharging is a deposition-dissolution reaction of metallic lithium.

In the charge-discharge curves, however, there was a change in shape in the segments not flat in the initial and final stages which was considered to correspond to the doping reaction and the de-doping reaction of lithium ions into and from titanium oxide represented by formula (1) as was observed in Embodiment 1. That is, it is thought, because there occurred a doping reaction of lithium ions into tungsten oxide represented by formula (2) instead of the doping reaction of lithium ions into titanium oxide represented by formula (1).

$$WO_3 + xLi^+ + xe^- \rightarrow Li_xWO_3 \qquad (2)$$

After charging, the above-mentioned battery was disassembled, and the cross section of the negative electrode was examined under SEM. The results showed that metallic lithium had deposited only between the second and first electrode components of the negative electrode and that the deposition was not in the form of dendrite but high in compactness and flatness.

As has been observed, it was found that a secondary lithium battery can be obtained according to the present invention which does not cause metallic lithium to grow in the form of dendrite though the deposition-dissolution reaction of metallic lithium is utilized as reaction at the negative electrode.

Embodiment 3

Except that lithium-doped vanadium oxide ($Li_xV_2O_5$) was used as an electronic-ionic mixed conductor, a secondary lithium battery was produced in the same manner as in Embodiment 1 and its characteristics were examined.

The negative electrode for the secondary lithium battery in the present embodiment was made in the same manner as in Embodiment 1 except that vanadium oxide was used instead of titanium oxide used in Embodiment 1.

Except that this negative electrode was used, a secondary lithium battery was produced in the same manner as in Embodiment 1 and its charge-discharge behavior was examined.

These results showed that the battery according to the present invention is high in charge-discharge cycle characteristics with little changes observed in discharge capacity with charge-discharge cycles. The operating voltage of this battery is approximately 4 V, and the potential at the negative electrode of this battery is about the same as the lithium electrode potential, which indicates that the reaction at the negative electrode of the battery during charging and discharging is a deposition-dissolution reaction of metallic lithium.

In the charge-discharge curves, however, there was a change in shape in the segments not flat in the initial and final stages which was considered to correspond to the doping reaction and the de-doping reaction of lithium ions into and from titanium oxide represented by formula (1) as was observed in Embodiment 1. That is, it is thought, because there occurred a doping reaction of lithium ions into vanadium oxide represented by formula (3) instead of the doping reaction of lithium ions into titanium oxide represented by formula (1).

$$V_2O_5 + xLi^+ + xe^- \rightarrow Li_xV_2O_5 \qquad (3)$$

After charging, the above-mentioned battery was disassembled, and the cross section of the negative electrode was examined under the scanning electron microscope (SEM). The results showed that metallic lithium had deposited only between the second and first electrode components of the negative electrode and that the deposition was not in the form of dendrite but high in compactness and flatness. As has been observed, it was found that a secondary lithium battery can be obtained according to the present invention which does not cause metallic lithium to grow in the form of dendrite though the deposition-dissolution reaction of metallic lithium is utilized as reaction at the negative electrode.

Embodiment 4

Except that an electrochemically reduced lithium ion conductive solid electrolyte represented by $Li_{1.3}Al_{0.3}Ti_{1.7}(PO_4)_3$ was used as an electronic-ionic mixed conductor, a secondary lithium battery was made up in the same manner as in Embodiment 1 and its characteristics were examined.

The lithium ion conductive solid electrolyte represented by $Li_{1.3}Al_{0.3}Ti_{1.7}(PO_4)_3$ was synthesized by mixing lithium carbonate ($Li_2CO_3$) and aluminum oxide ($Al_2O_3$), titanium oxide ($TiO_2$), and ammonium hydrogenphosphate ($(NH_4)_2HPO_4$) in a mole ratio of 0.65 : 0.15 : 1.7 : 3, and then heating in the atmosphere at 800°C.

Except that $Li_{1.3}Al_{0.3}Ti_{1.7}(PO_4)_3$ thus obtained was used instead of titanium oxide used in Embodiment 1, the negative electrode for the secondary lithium battery in the present embodiment was made in the same manner as in Embodiment 1.

Except that this negative electrode was used, a secondary lithium battery was produced in the same manner as in Embodiment 1 and its charge-discharge behavior was examined.

These results showed that the battery according to the present invention is high in charge-discharge cycle characteristics with little changes observed in discharge capacity with charge-discharge cycles. The operating voltage of this battery is approximately 4 V, and the potential at the negative electrode of this battery is about the same as the lithium electrode potential, which indicates that the reaction at the negative electrode of the battery during charging and discharging is a deposition-dissolution reaction of metallic lithium.

In the charge-discharge curves, however, there was a change in shape in the segments not flat in the initial and final stages which was considered to correspond to the doping reaction and the de-doping reaction of lithium ions into and from titanium oxide represented by formula (1) as was observed in Embodiment 1. That is, it is thought, because there occurred an electrochemical reducing reaction of lithium ion conductive solid electrolyte represented by $Li_{1.3}Al_{0.3}Ti_{1.7}(PO_4)_3$ instead of the doping reaction of lithium ions into titanium oxide represented by formula (1).

When the battery was disassembled after it was charged, it was found that the electrode layer formed by

$Li_{1.3}Al_{0.3}Ti_{1.7}(PO_4)_3$ turned black, indicating that $Li_{1.3}Al_{0.3}Ti_{1.7}(PO_4)_3$ changes from a non-electronic conductive solid electrolyte to an electronic-ionic mixed conductor as it is reduced electrochemically.

After charging, the above-mentioned battery was disassembled, and the cross section of the negative electrode was examined under SEM. The results showed that metallic lithium had deposited only between the second and first electrode components of the negative electrode and that the deposition was not in the form of dendrite but high in compactness and flatness.

As has been observed, it was found that a secondary lithium battery can be obtained according to the present invention which does not cause metallic lithium to grow in the form of dendrite though the deposition-dissolution reaction of metallic lithium is utilized as reaction at the negative electrode.

Embodiment 5

Except that an electrochemically reduced lithium ion conductive solid electrolyte represented by $Li_{0.5}La_{0.5}TiO_3$ was used as an electronic-ionic mixed conductor, a secondary lithium battery was made up in the same manner as in Embodiment 1 and its characteristics were examined.

The lithium ion conductive solid electrolyte represented by $Li_{0.5}La_{0.5}TiO_3$ was synthesized by mixing lithium carbonate ($Li_2CO_3$) and lanthanum oxide ($La_2O_3$) and titanium oxide ($TiO_2$) in a mole ratio of 0.25 : 0.25 : 1, and then heating in the atmosphere at 1,200°C.

The negative electrode for the secondary lithium battery in the present embodiment was made in the same manner as in Embodiment 1 except that $Li_{0.5}La_{0.5}TiO_3$ thus obtained was used instead of titanium oxide used in Embodiment 1.

Except that this negative electrode was used, a secondary lithium battery was produced in the same manner as in Embodiment 1 and its charge-discharge behavior was examined.

These results showed that the battery according to the present invention is high in charge-discharge cycle characteristics with little changes observed in discharge capacity with charge-discharge cycles. The operating voltage of this battery is approximately 4 V, and the potential at the negative electrode of this battery is about the same as the lithium electrode potential, which indicates that the reaction at the negative electrode of the battery during charging and discharging is a deposition-dissolution reaction of metallic lithium.

In the charge-discharge curves, however, there was a change in shape in the segments not flat in the initial and final stages which was considered to correspond to the doping reaction and the de-doping reaction of lithium ions into and from titanium oxide represented by formula (1) as was observed in Embodiment 1. That is, it is thought, because there occurred an electrochemical reducing reaction of lithium ion conductive solid electrolyte represented by $Li_{0.5}La_{0.5}TiO_3$ instead of the doping reaction of lithium ions into titanium oxide represented by formula (1). When the battery was disassembled after it was charged, it was found that the electrode layer formed by $Li_{0.5}La_{0.5}TiO_3$ turned deep blue, indicating that $Li_{0.5}La_{0.5}TiO_3$ changed from a non-electronic conductive solid electrolyte to an electronic-ionic mixed conductor as it was reduced electrochemically.

After charging, the above-mentioned battery was disassembled, and the cross section of the negative electrode was examined under SEM. The results showed that metallic lithium had deposited only between the second and first electrode components of the negative electrode and that the deposition was not in the form of dendrite but high in compactness and flatness.

As has been observed, it was found that a secondary lithium battery can be obtained according to the present invention which does not cause metallic lithium to grow in the form of dendrite though the deposition-dissolution reaction of metallic lithium is utilized as reaction at the negative electrode.

Embodiment 6

Except that $LiNiO_2$ was used as a positive electrode active material, a secondary lithium battery was made up in the same manner as in Embodiment 1 and its characteristics were examined.

$LiNiO_2$ was synthesized by mixing nickel oxide (NiO) and titanium carbonate ($Li_2CO_3$) in a mole ratio of 2 : 1, and then heating the mixture in a stream of oxygen at 600°C.

Except that this $LiNiO_2$ was used instead of $LiCoO_2$, a secondary lithium battery was made up in the same manner as in Embodiment 1 and its charge-discharge behavior was examined. But the final charging voltage was set at 4.1 V.

These results showed that the battery according to the present invention is high in charge-discharge cycle characteristics with little changes observed in discharge capacity with charge-discharge cycles. The operating voltage of this battery is approximately 3.9 V, and the reaction at the negative electrode of this battery during charging and discharging is a deposition-dissolution reaction of metallic lithium.

After charging, the above-mentioned battery was disassembled, and the cross section of the negative electrode was examined under SEM. The results showed that metallic lithium had deposited only between the second and first electrode components of the negative electrode and that the deposition was not in the form of dendrite but high in compactness and flatness.

As has been observed, it was found that a secondary lithium battery can be obtained according to the present invention which does not cause metallic lithium to grow in the form of dendrite though the deposition-dissolution reaction of metallic lithium is utilized as reaction at the negative electrode.

Embodiment 7

Except that LiMn$_2$O$_4$ was used as a positive electrode active material, a secondary lithium battery was made up in the same manner as in Embodiment 1 and its characteristics were examined.

LiMn$_2$O$_4$ was synthesized by mixing lithium carbonate (Li$_2$CO$_3$) and manganese acetate (Mn(CH$_3$COO)$_2$ and heating the mixture in the atmosphere at 750°.

Except that this LiMn$_2$O$_4$ was used instead of LiCoO$_2$, a secondary lithium battery was made up in the same manner as in Embodiment 1 and its charge-discharge behavior was examined.

These results showed that the battery according to the present invention is high in charge-discharge cycle characteristics with little changes observed in discharge capacity with charge-discharge cycles. The operating voltage of this battery is approximately 4 V, and the potential at the negative electrode of this battery is about the same as the lithium electrode potential, which indicates that the reaction at the negative electrode of the battery during charging and discharging is a deposition-dissolution reaction of metallic lithium.

After charging, the above-mentioned battery was disassembled, and the cross section of the negative electrode was examined under SEM. The results showed that metallic lithium had deposited only between the second and first electrode components of the negative electrode and that the deposition was not in the form of dendrite but high in compactness and flatness.

As has been observed, it was found that a secondary lithium battery can be obtained according to the present invention which does not cause metallic lithium to grow in the form of dendrite though the deposition-dissolution reaction of metallic lithium is utilized as reaction at the negative electrode.

Embodiment 8

Except that a stainless steel foil was used as a first electrode component instead of the copper foil used in Embodiment 1, a secondary lithium battery was made up in the same manner as in Embodiment 1 and its characteristics were examined.

These results showed that the battery according to the present invention is high in charge-discharge cycle characteristics with little changes observed in discharge capacity with charge-discharge cycles. The operating voltage of this battery is approximately 4 V, and the potential at the negative electrode of this battery is about the same as the lithium electrode potential, which indicates that the reaction at the negative electrode of the battery during charging and discharging is a deposition-dissolution reaction of metallic lithium.

After charging, the above-mentioned battery was disassembled, and the cross section of the negative electrode was examined under SEM. The results showed that metallic lithium had deposited only between the second and first electrode components of the negative electrode and that the deposition was not in the form of dendrite but high in compactness and flatness.

As has been observed, it was found that a secondary lithium battery can be obtained according to the present invention which does not cause metallic lithium to grow in the form of dendrite though the deposition-dissolution reaction of metallic lithium is utilized as reaction at the negative electrode.

Embodiment 9

Except that a nickel foil was used as a first electrode component instead of the copper foil used in Embodiment 1, a secondary lithium battery was made up in the same manner as in Embodiment 1 and its characteristics were examined.

These results showed that the battery according to the present invention is high in charge-discharge cycle characteristics with little changes observed in discharge capacity with charge-discharge cycles. The operating voltage of this battery is approximately 4 V, and the potential at the negative electrode of this battery is about the same as the lithium electrode potential, which indicates that the reaction at the negative electrode of the battery during charging and discharging is a deposition-dissolution reaction of metallic lithium.

After charging, the above-mentioned battery was disassembled, and the cross section of the negative electrode was examined under SEM. The results showed that metallic lithium had deposited only between the second and first electrode components of the negative electrode and that the deposition was not in the form of dendrite but high in compactness and flatness.

As has been observed, it was found that a secondary lithium battery can be obtained according to the present invention which does not cause metallic lithium to grow in the form of dendrite though the deposition-dissolution reaction of metallic lithium is utilized as reaction at the negative electrode.

Embodiment 10

Except that graphite was used as a first electrode component instead of the copper foil used in Embodiment 1, a secondary lithium battery was made up in the same manner as in Embodiment 1 and its characteristics were examined. The details are hereinafter described.

First, a negative electrode was prepared in the following manner.

Graphite and a binder PVDF were blended in a mixing ratio of 95:5 by weight in N-methyl-2-pyrolizidone (NMP). More NMP was then added to adjust the viscosity to prepare a slurry containing graphite and PVDF. This slurry was coated over the current collector copper foil by doctor blade technique, and then dried in hot air at 80°C to form a first electrode component. On this first electrode component was then formed a second electrode component comprised mainly of the electronic-ionic mixed conductor titanium oxide in the same manner as Embodiment 1. A disk 16.5 mm in diameter was punched out of the electrode thus obtained and was used as a negative electrode for the secondary lithium battery. But the content of graphite in the negative electrode was 20 mg.

Except that the negative electrode thus obtained was used, a secondary lithium battery was made up in the same manner as in Embodiment 1 and its charge-discharge behavior was examined.

These results showed that the battery according to the present invention is high in charge-discharge cycle characteristics with little changes observed in discharge capacity with charge-discharge cycles. The operating voltage of this battery is approximately 4 V, and the potential at the negative electrode of this battery is about the same as the lithium electrode potential, which indicates that the reaction at the negative electrode of the battery during charging and discharging is a deposition-dissolution reaction of metallic lithium.

In the charge-discharge curves, however, there was a change in shape in the segments not flat in the initial and final stages which was considered to correspond to the doping reaction and the de-doping reaction of lithium ions into and from titanium oxide represented by formula (1) as was observed in Embodiment 1. That is, it is thought, because there occurred a reaction for lithium ions to be doped into the layers of graphite represented by formula (4) in addition to a reaction for lithium ions to be doped into titanium oxide represented by formula (1) at the second electrode component of the negative electrode.

$$C_6 + xLi^+ + xe^- \rightarrow C_6Li_x \qquad (4)$$

After charging, the above-mentioned battery was disassembled, and the cross section of the negative electrode was examined under SEM. The results showed that metallic lithium had deposited only between the second and first electrode components of the negative electrode and that the deposition was not in the form of dendrite but high in compactness and flatness.

As has been observed, it was found that a secondary lithium battery can be obtained according to the present invention which does not cause metallic lithium to grow in the form of dendrite though the deposition-dissolution reaction of metallic lithium is utilized as reaction at the negative electrode.

Embodiment 11

In the present embodiment, a solid-state secondary lithium battery was made up using lithium-doped titanium oxide ($Li_xTiO_2$) as an electronic-ionic mixed conductor as in Embodiment 1 and a lithium-ion conductive oxysulfide glass represented by 0.01 $Li_3PO_4$ - 0.63 $Li_2S$ - 0.36 $SiS_2$ as a lithium ion conductive electrolyte. The details are hereinafter described.

First, a lithium ion conductive oxysulfide glass represented by 0.01 $Li_3PO_4$ - 0.63 $Li_2S$ - 0.36 $SiS_2$ was synthesized. Lithium phosphate ($Li_3PO_4$), lithium sulfide ($Li_2S$) and silicone sulfide ($SiS_2$) were blended in a mole ratio of 0.01 : 0.63 : 0.36, and the mixture was then placed in a glassy carbon crucible. The crucible was heated to 950°C in a stream of argon so that the mixture was in a molten state. After two hours, the melt was dropped between twin rollers and quenched to obtain a lithium ion conductive oxysulfide glass represented by 0.01 $Li_3PO_4$ - 0.63 $Li_2S$ - 0.36 $SiS_2$.

A powder of the solid electrolyte thus obtained and crushed and the anatase-type titanium oxide as an electronic-ionic mixed conductor as in Embodiment 1 were blended in a ratio of 4 : 6 by weight to produce a material for a second electrode component of the negative electrode.

For the positive electrode, $LiCoO_2$ obtained in Embodiment 1 and the above-mentioned solid electrolyte powder were blended in a ratio of 6 : 4 by weight and this mixture was used.

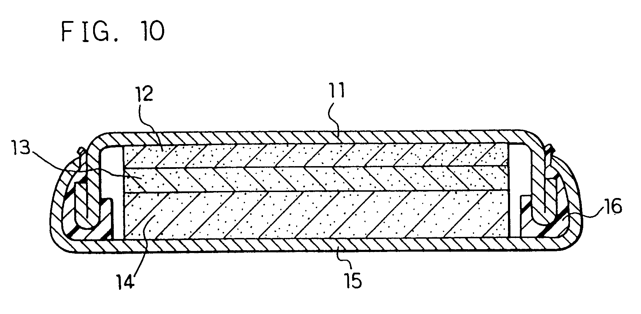

A secondary lithium battery with a cross section as shown in Fig. 10 was made up using the above positive, negative electrodes and electrolyte. In Fig. 10, the reference number 11 indicates a stainless steel sealing plate, which is also the first electrode component of the negative electrode. The reference number 12 is a second electrode component of the negative electrode made of a mixed layer of titanium oxide and the solid electrolyte powder obtained above. Three layers - the second electrode component 12, solid electrolyte layer 13 and positive electrode 14 - are compressed into one piece. 15 is a stainless steel battery case, and 16 is a gasket.

The lithium battery thus obtained was subjected to a charge-discharge cycle test at a constant current of 5 mA within a voltage range between 2.5 V and 4.2 V.

These results showed that the battery according to the present invention is high in charge-discharge cycle characteristics with little changes observed in discharge capacity with charge-discharge cycles. The operating voltage of this battery is approximately 4 V, and the potential at the negative electrode of this battery is about the same as the lithium electrode potential, which indicates that the reaction at the negative electrode of the battery during charging and discharging is a deposition-dissolution reaction of metallic lithium.

After charging, the above-mentioned battery was cut up, and the cross section of the negative electrode was examined under SEM. The results showed that metallic lithium had deposited only between the second and first electrode components of the negative electrode and that the deposition was not in the form of dendrite but high in compactness and flatness.

As has been observed, it was found that a secondary lithium battery can be obtained according to the present invention which does not cause metallic lithium to grow in the form of dendrite though the deposition-dissolution reaction of metallic lithium is utilized as reaction at the negative electrode.

Comparative Example 2

In the present comparative example, a solid-state secondary lithium battery was made up without using the electronic-ionic mixed conductor titanium oxide doped with lithium in Embodiment 11. The details are hereinafter described.

Except that a stainless steel spacer was inserted instead of the second electrode component 12 in Fig. 10 in Embodiment 11, a solid-state secondary lithium battery was produced in the same manner as Embodiment 11.

These results showed that the charge-discharge efficiency (ratio of the quantity of electricity discharged to the quantity of electricity charged) in charge-discharge cycle was not higher than 90 % and that there was observed an irregularity in the charge-discharge curve as the charge-discharge cycle was repeated, the irregularity seemingly attributable to a short-circuit phenomenon within the battery.

It is surmised from those results that in the solid-state secondary battery in the present comparative example, lithium deposited in the form of dendrite in charging which could not completely discharge and that an internal short-circuit occurred within the battery as the charge-discharge cycle was repeated.

In the embodiments, lithium ion-doped titanium oxide, tungsten oxide and others were used as a transition metal oxide to form a second electrode component of the negative electrode; the same results can be obtained by using other transition metal oxides including rutile type titanium oxide, niobium oxide, molybdenum oxide, iron oxide, cobalt oxide, nickel oxide, manganese oxide, complex oxides of those transition metal oxides with lithium, or those transition metal oxides doped with sodium ions, potassium ions etc. Also, as a lithium ion conductive solid electrolyte making up the second electrode component, other than those described in the embodiments can be used with identical results; they include $Li_{1+x}Sc_xTi_{2-x}(PO_4)_3$ and $Li_{0.5-3x}Sm_{0.5+x}TiO_3$. To develop electronic-lithium ionic mixed conductivity, furthermore, it is possible to combine the electronic conductor and the lithium ion conductor, in which case lithium nitride can be used as lithium ion conductor; and it is understood that the present invention is not limited by the materials described in the embodiments as materials to make the second electrode component.

In the embodiments, metallic copper, stainless steel etc. were used as materials to make up the first electrode component of the negative electrode, but the same results can be obtained with other materials like pure iron, metallic lithium, indium and aluminum; it is understood that the present invention is not limited by the materials described in the embodiments as materials to make up the first electrode component.

Also, in the embodiments, a description was made of the secondary lithium batteries with lithium cobalt oxide, lithium nickel oxide etc. as positive electrode active materials, but it goes without saying that similar results can be obtained with ones not mentioned in the embodiments including vanadium oxide and lithium nickel vanadium oxide; it is understood that the present invention is not limited to the secondary lithium batteries using the positive electrode active materials described in the embodiments.

Also, the embodiments describe the secondary lithium batteries using such lithium ion conductive electrolytes as one prepared by dissolving $LiPF_6$ in a mixed solvent of propylene carbonate and dimethoxyethane; it goes without saying that identical results can be obtained with electrolytes prepared with such supporting electrolytes other than the ones described in the embodiments as $LiClO_4$ and $LiBF_4$ or electrolytes prepared with ethylene carbonate and other solvents than the ones described in the embodiments. As lithium ion conductive solid electrolytes, too, other than those described in the embodiments can be used with identical results, the other electrolytes including other inorganic solid electrolytes and polymer solid electrolytes like $Li_2O\text{-}Li_2S\text{-}SiS_2$, $Li_2S\text{-}SiS_2$, $LiI\text{-}Li_2S\text{-}SiS_2$, $Li_2S\text{-}P_2S_5$ and $Li_2S\text{-}B_2S_3$; it is to be understood that the present invention is not limited to the secondary lithium batteries using the electrolytes described in the embodiments.

As described, the present invention can provide a secondary lithium battery with a high energy density of which the electrode reaction at the negative electrode is a dissolution-deposition reaction of metallic lithium free from causing metallic lithium to grow in the form of dendrite.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

**Claims**

1. A secondary lithium battery comprising a lithium ion conductive electrolyte, a positive electrode and a negative electrode in contact with said electrolyte, wherein said negative electrode has a first electrode component where a deposition-dissolution reaction of metallic lithium will take place during charging and discharging and a second electrode component to prevent metallic lithium from being deposited in the form of dendrite.

2. The secondary lithium battery in accordance with claim 1, wherein said first electrode component has electronic conductivity and is electrically connected to a terminal of the negative electrode, and said second electrode component has electronic-ionic mixed conduction.

3. The secondary lithium battery in accordance with claim 1, wherein said first electrode component is electronic conductive and is electrically connected to a terminal of the negative electrode, and said second electrode component is semiconductive.

4. The secondary lithium batteries in accordance with claim 1, wherein said second electrode component is formed on said first electrode component.

5. The secondary lithium battery in accordance with claim 2, wherein the electronic conductivity of said second electrode component is lower than the electric conductivity of said electrolyte.

6. The secondary lithium battery in accordance with claim 5, wherein the electronic conductivity at room temperature of said second electrode component is not higher than $5 \times 10^{-2}$ S/cm.

7. The secondary lithium battery in accordance with claim 2, wherein the transport number of electron of said second electrode component is lower than the transport number of lithium ion.

8. The secondary lithium battery in accordance with claim 1, wherein said second electrode component comprises a material selected from the group consisting of transition metal oxides, transition metal sulfides, and lithium ion conductive electrolytes.

9. The secondary lithium battery in accordance with claim 1, wherein said second electrode component comprises a semiconductive material having a band gap of 1 eV to 5 eV.

10. A secondary lithium battery comprising a lithium ion conductive electrolyte, a positive electrode and negative electrode in contact with said electrolyte, wherein said negative electrode has a first electrode component which is comprised of an electronic conductive material and is electrically connected to a terminal of the negative electrode and a second electrode component which is comprised of an electronic-ionic mixed conductive material.

11. A secondary lithium battery comprising a lithium ion conductive electrolyte, a positive electrode and negative electrode in contact with said electrolyte, wherein said negative electrode has a first electrode component which is comprised of an electronic conductive material and is electrically connected to a terminal of the negative electrode and a second electrode component which is comprised of a semiconductor material.

## FIG. 1

(a)

(b)

# FIG. 2

(a)

Metal    Electrolyte

$E_F$

$e^-$

Li$^+$/Li

Potential

(b)

Semiconductor  Electrolyte

Conductive
electron
band

$E_C$

$E_F$

$e^-$

$E_V$

Li$^+$/Li

Valence
band

Potential

# FIG. 3

(a)

First electrode component     Deposited Li     Second electrode component

(b)

First electrode component     Deposited Li     Second electrode component

(c)

First electrode component     Deposited Li     Second electrode component

# FIG. 4

(a)

dx/dE in Li$_x$MeO$_y$

Li$^+$/Li

$E_t$

$E_b$

(b)

Band 2

e$^-$

Li$^+$/Li

Li

$E_t$

h$^+$

Band 1

$E_b$

Li electrode          Li$_x$MeO$_y$ electrode

EP 0 875 951 A1

FIG. 5

FIG. 6

FIG. 7

FIG. 8

first cycle

5th cycle

Battery voltage / V

Capacity / mAh

FIG. 9

Discharge capacity / mAh

Cycles

FIG. 10

European Patent
Office

**EUROPEAN SEARCH REPORT**

Application Number

EP 98 10 5635

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 715 366 A (CANON KK) 5 June 1996<br>* page 4, line 14-22 *<br>* page 5, line 42 - page 6, line 7 *<br>* page 9, line 18-32 *<br>* example 1 * | 1-11 | H01M4/02<br>H01M10/40<br>H01M4/48<br>H01M4/58 |
| X | US 5 147 739 A (BEARD KIRBY W) 15 September 1992<br>* column 2, line 6-15 *<br>* column 2, line 66 - column 3, line 26 *<br>* column 5, line 15-18 *<br>* column 6, line 18-22 * | 1-11 | |
| X | EP 0 600 718 A (CANON KK) 8 June 1994<br>* page 3, line 2-43 *<br>* page 13, line 46 - page 14, line 5 *<br>* page 6, line 42 - page 7, line 43 * | 1-11 | |
| X | PATENT ABSTRACTS OF JAPAN<br>vol. 011, no. 113 (E-497), 9 April 1987<br>& JP 61 263069 A (MATSUSHITA ELECTRIC IND CO LTD), 21 November 1986,<br>* abstract * | 1,10,11 | |
| D,X | PATENT ABSTRACTS OF JAPAN<br>vol. 017, no. 019 (E-1306), 13 January 1993<br>& JP 04 248276 A (MATSUSHITA ELECTRIC IND CO LTD), 3 September 1992,<br>* abstract * | 1,10,11 | TECHNICAL FIELDS SEARCHED (Int.Cl.6)<br><br>H01M |
| X | US 5 314 765 A (BATES JOHN B) 24 May 1994<br>* column 2, line 34-39 *<br>* column 3, line 23-40 * | 1-11 | |

-/--

The present search report has been drawn up for all claims

| Place of search | Date of completion of the search | Examiner |
|---|---|---|
| MUNICH | 27 July 1998 | Engl, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

FPO FORM 1503 03 82 (P04C01)

**European Patent Office**

# EUROPEAN SEARCH REPORT

Application Number

EP 98 10 5635

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN vol. 017, no. 165 (E-1343), 30 March 1993 & JP 04 324258 A (NIPPONDENSO CO LTD), 13 November 1992, * abstract * | 1-11 | |
| A | EP 0 617 474 A (MATSUSHITA ELECTRIC IND CO INC) 28 September 1994 * the whole document * | 1-11 | |

TECHNICAL FIELDS SEARCHED (Int.Cl.6)

The present search report has been drawn up for all claims

| Place of search | Date of completion of the search | Examiner |
|---|---|---|
| MUNICH | 27 July 1998 | Engl, H |

EPO FORM 1503 03.82 (P04C01)